# EUROPEAN PATENT SPECIFICATION

(11) **EP 2 108 494 B1**
(45) Date of publication and mention of the grant of the patent: **02.07.2014**
(21) Application number: 09251057.7
(22) Date of filing: 08.04.2009
(51) Int. Cl.: B28B 11/00, B28B 11/04, B01J 23/63, B01J 35/04, B01J 37/02, C04B 41/00, C04B 41/45, C04B 41/87

(54) **Manufacturing method of honeycomb structure**
Herstellungsverfahren für eine Wabenstruktur
Procédé de fabrication de structure en nid d'abeille

(30) Priority: 11.04.2008 JP 2008103256
(43) Date of publication of application: 14.10.2009
(73) Proprietor: NGK Insulators, Ltd., Nagoya-City, Aichi Pref. 467-8530 (JP)
(72) Inventor: Hiramatsu, Takuya, Nagoya City Aichi-ken, 467-8530 (JP)
(74) Representative: Paget, Hugh Charles Edward

(56) References cited:
- CA-A1- 1 196 873
- JP-A- 2002 519 186
- JP-A- 2005 118 657
- US-A1- 2004 191 133

## Description

### BACKGROUND OF THE INVENTION

### 1. Field of the Invention

The present invention relates to a manufacturing method of a honeycomb structure. More particularly, it relates to a manufacturing method of a honeycomb structure capable of improving production efficiency.

### 2. Description of the Related Art

An exhaust gas discharged from an internal combustion engine such as a diesel engine or various combustion devices (hereinafter referred to as "the internal combustion engine or the like" sometimes) includes a large amount of particulate matters mainly consisting of soot (graphite). When the particulate matters are discharged to the atmosphere as they are, environmental pollution is caused, and hence a filter for collecting the particulate matters is mounted in an exhaust gas through channel from the internal combustion engine or the like sometimes.

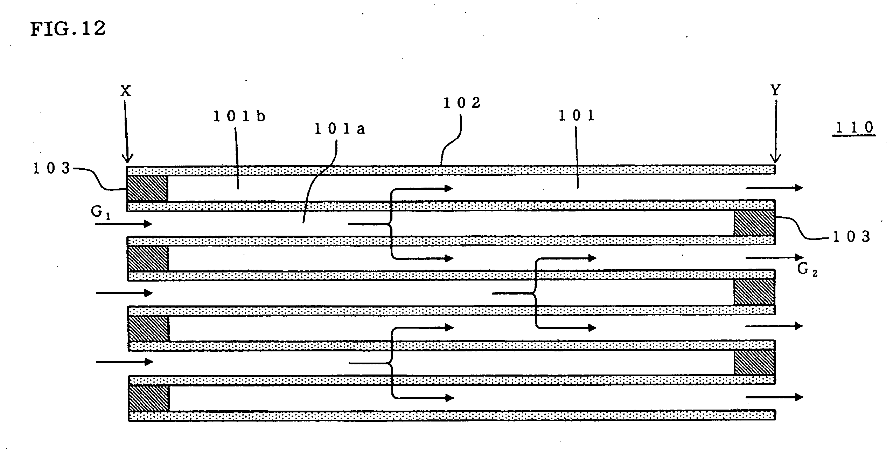

Examples of the filter used for such a purpose include a honeycomb structure (a honeycomb filter) 110 which has, as shown in Fig. 12, porous ceramic partition walls 102 for partitioning the structure into cells 101 as through channels of a fluid. In the structure, predetermined cells (inflow cells) 101a having one end X opened and the other end Y plugged with plugging portions 103 are arranged alternately with the remaining cells (outflow cells) 101b having one end X plugged with the plugging portions 103 and the other end Y opened. In such a honeycomb filter, an exhaust gas (an exhaust gas G₁) containing the particulate matters and flowing into the opening ends of the predetermined cells 101a can effectively be purified by the partition walls 102 (the particulate matters are removed) and the gas can be discharged (allowed to flow out) from the opening ends of the remaining cells 101b as an exhaust gas (a purified gas) G₂ from which the particulate matters have been removed. Fig. 12 is a schematic diagram showing the section of a conventional honeycomb structure which is parallel to a central axis.

Furthermore, in recent years, a honeycomb filter including an oxidation catalyst for promoting the oxidation (burning) of the particulate matters has been used (hereinafter referred to as "the catalyst loading filter" sometimes). In such a catalyst loading filter, the oxidation (burning) of the particulate matters in the exhaust gas collected by the partition walls is promoted, whereby the particulate matters in the exhaust gas can efficiently continue to be collected while suppressing the lowering of the purification performance of the honeycomb filter.

The catalyst loading filter oxidizes and removes the collected particulate matters by the catalyst loaded on the partition walls, but the catalyst is loaded in pores of the partition walls to efficiently collect, oxidize and remove the particulate matters, and hence an exhaust purification device is suggested in which the average opening diameter of the partition wall pores on an inflow cell side is larger than that on an outflow cell side (see JP-A-2002-309921). According to such an exhaust purification device, since the average opening diameter of the partition wall pores on the inflow cell side is large, the particulate matters included in the exhaust gas can easily penetrate not only the surfaces of the partition walls on the inflow cell side but also the partition wall pores. Furthermore, it is considered that since the average opening diameter of the partition wall pores on the outflow cell side is small, any particulate matter does not leak on the outflow cell side. In addition, the particulate matters included in the exhaust gas can thus efficiently be collected, a contact degree between the particulate matters and the oxidation catalyst loaded in the partition wall pores improves, and the oxidation (burning) of the particulate matters can sufficiently be promoted.

In the above exhaust purification device, on an assumption that the pores of the partition walls are barrel type spaces in which each pore diameter gradually decreases from the center of the partition wall in a thickness direction to both surfaces of the partition wall, the one surface of the partition wall is removed as much as a predetermined depth by a surface reforming agent, whereby the average opening diameter of the partition wall pores facing the exhaust gas inflow cells is larger than that of the partition wall pores facing the exhaust gas (purified gas) outflow cells.

However, as disclosed in JP-A-2002-309921, the pores of the partition walls made of, for example, a porous ceramic material are formed by gaps between aggregate particles bonded to one another by sintering. Therefore, although the average opening diameter of the pores on the outflow cell side is small, the collection of the particulate matters is insufficient, and particularly there is a problem that a large amount of particulate matters leak from the outflow cell side immediately after the start of the collection.

On the other hand, there is suggested a filter device in which a film (the film on an outlet side) having pore diameters smaller than those of a filter article is applied onto the surface of the filter article (the partition wall) on the gas outlet side, and the particulate matters (the soot) flowing into the pores from the surface of the filter article on a gas inlet side are stopped by the outlet side film, and the matters are thus deposited in the pores of the filter article, whereby a contact ratio between the soot and the catalyst is raised to increase the burning speed of the soot (see JP-B-2002-519186). According to this filter device, it is possible not only to deposit the particulate matters on the whole pores of the partition walls but also to securely collect the particulate matters on the downstream portions (the gas outlet side) of the partition walls. It is therefore considered that it is possible to solve the problem that the particulate matters leak from the outflow cell side.

However, in JP-B-2002-519186, the outlet side film is formed by sintering a formed article forming the filter article, coating the surface of the filter article on the gas outlet side with a film forming slurry, performing a thermal treatment at 1100 to 1500°C, and sintering the article again. That is, the thermal treatment for forming the outlet side film is performed separately from a thermal treatment (the sintering) for obtaining the filter article. Thus, two thermal treatments, that is, the sintering of the filter article and the forming of the outlet side film are required, and hence there has been a problem of the lowering of production efficiency. Moreover, particulate substances made of an alumina fiber or alumina/SiC are used as a material of the outlet side film, whereas ceramic powder of SiC, Si₃N₄, SiONC, alumina, cordierite, mullite, spodumene, or one member of Na superionic conductor (NASICON) structure group is used as a material of the filter article. Therefore, in such a filter device, the material constituting the filter article as a soot depositing part is different from that constituting the outlet side film which is present on the downstream side of the filter article. Therefore, there has been a problem that the mismatch of thermal expansion is caused during the burning of the deposited soot, the outlet side film breaks down, and subsequently a collection performance remarkably lowers.

US 2004/0191133 describes a catalyst-carried filter including a honeycomb structure including a plurality of cells partitioned by partition walls. The honeycomb structure includes a fine coating layer constituted of a porous ceramic formed on a surface of the partition wall on a purified gas outflow cell side.

It further discloses a manufacturing method of a honeycomb structure, comprising the steps of forming a forming material into a honeycomb article, drying the formed honeycomb article, forming plugging portions in opening ends of the predetermined cells, firing the plugged honeycomb article, charging a downstream layer forming slurry into the predetermined cells of the honeycomb article having the formed plugging portions, and firing the coated honeycomb article having the formed plugging portions to prepare the honeycomb structure.

### SUMMARY OF THE INVENTION

The present invention has been developed in view of the problems of such a conventional technology, and is characterized by providing a manufacturing method of a honeycomb structure in which partition walls and downstream layers applied onto the surfaces of the partition walls are simultaneously fired, whereby production efficiency can be improved.

According to the present invention, the following manufacturing method of the honeycomb structure is provided.
[1] A manufacturing method of a honeycomb structure, comprising the steps of: forming a forming material containing a ceramic material into a honeycomb article including porous partition walls which separate and form a plurality of cells functioning as through channels of a fluid; drying the formed honeycomb article to prepare a dried honeycomb article; forming plugging portions in opening ends of the predetermined cells on one side and opening ends of the remaining cells on the other side in the dried honeycomb article; charging a downstream layer forming slurry containing a ceramic material into the predetermined cells of the dried honeycomb article having the formed plugging portions, discharging the downstream layer forming slurry to coat the inner wall surfaces of the predetermined cells with the downstream layer forming slurry, and then drying the article to prepare the coated and dried honeycomb article in which downstream layer forming films are applied onto the inner wall surfaces of the predetermined cells; and firing the coated and dried honeycomb article having the formed plugging portions to prepare the honeycomb structure in which porous downstream layers having an average pore diameter smaller than that of the partition walls are applied onto the inner wall surfaces of the predetermined cells and which has the formed plugging portions.
[2] The manufacturing method of the honeycomb structure according to [1], wherein the ceramic material contained in the forming material of the formed honeycomb article is the same as that contained in the downstream layer forming slurry.
[3] The manufacturing method of the honeycomb structure according to [2], wherein the ceramic material contains silicon carbide particles and metal silicon.
[4] The manufacturing method of the honeycomb structure according to any one of [1] to [3], wherein the coated and dried honeycomb article having the formed plugging portions is fired in a temperature range of 1400 to 1800°C.
[5] The manufacturing method of the honeycomb structure according to any one of [1] to [4], wherein the downstream layers have an average pore diameter of 1 to 15 µm and the partition walls have an average pore diameter of 35 to 80 µm in the honeycomb structure having the formed plugging portions.

According to the manufacturing method of the honeycomb structure of the present invention, the formed and unfired honeycomb article (the dried honeycomb article having the formed plugging portions) is coated with the downstream layer forming slurry to form the downstream layer forming films, and then the formed and unfired honeycomb article (the partition walls) and the downstream layer forming films for coating the partition walls are simultaneously fired, so that the number of firing times can be set to one, and a production efficiency can be improved.

### BRIEF DESCRIPTION OF THE DRAWINGS

Fig. 1 is a perspective view schematically showing a formed honeycomb article obtained in an intermediate stage of steps in a manufacturing method of a honeycomb structure of the present invention;
Fig. 2 is a schematic diagram showing the section of the formed honeycomb article obtained in the intermediate stage of the steps in the manufacturing method of the honeycomb structure of the present invention, the section being parallel to a central axis;
Fig. 3 is a schematic diagram showing the section of a coated and dried honeycomb article obtained in the intermediate stage in one manufacturing method of a honeycomb structure which is outside the present invention, the section being parallel to the central axis;
Fig. 4 is a schematic diagram showing the section of the coated and dried honeycomb article obtained in the intermediate stage in the manufacturing method of a honeycomb structure which is outside the present invention, the section being parallel to the central axis;
Fig. 5 is a schematic diagram showing the section of the honeycomb structure obtained by the manufacturing method of a honeycomb structure which is outside the present invention, the section being parallel to the central axis;
Fig. 6 is a schematic diagram in which a region P of Fig. 5 is enlarged;

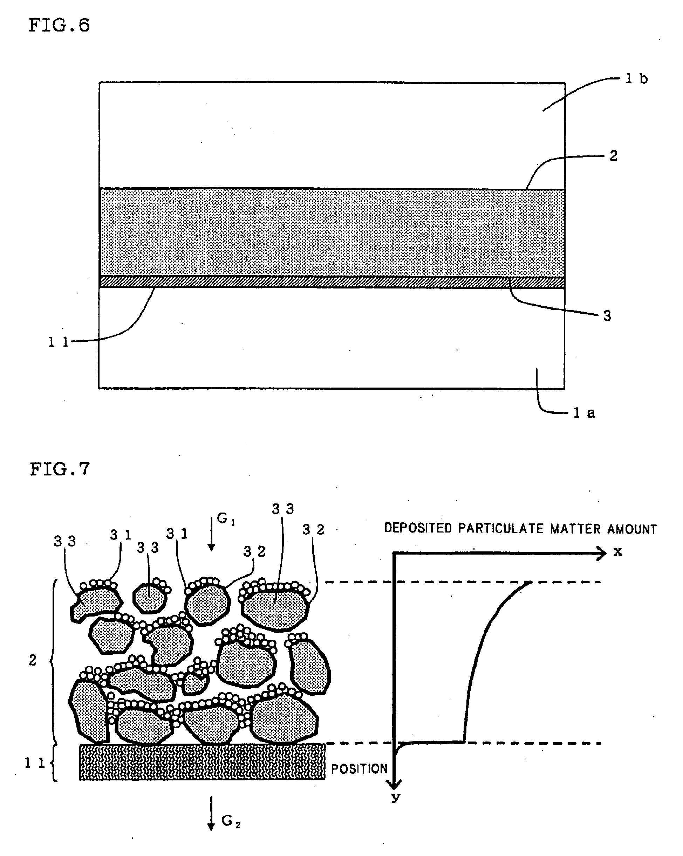

Fig. 7 includes a diagram shown on the left side as a schematic diagram showing the section of the honeycomb structure obtained by the manufacturing method of the honeycomb structure of the present invention, the section being parallel to the thickness direction of "an upstream layer of each partition wall" and "a downstream layer of the partition wall", and it also includes a graph shown on the right side as a graph schematically showing the collected amount (the existing amount) of particulate matters in positions of "the upstream layer of the partition wall" and "the downstream layer of the partition wall" in the thickness direction;
Fig. 8 is a perspective view schematically showing a joined type honeycomb structure obtained by joining honeycomb structures manufactured by the manufacturing method of the honeycomb structure of the present invention;
Fig. 9 is an SEM photograph of a section of each partition wall (an upstream layer of the partition wall and a downstream layer of the partition wall) of the joined type honeycomb structure of Example 1, the section being parallel to a thickness direction;
Fig. 10 is a graph showing a relation between a distance from the outlet-side surface of the partition wall (the distance in the thickness direction) and porosity in the position of the distance;
Fig. 11 is a graph showing the pore distribution of the whole partition wall, the pore distribution of the upstream layer of the partition wall, the pore distribution of the downstream layer of the partition wall and the average pore diameter of the downstream layer of the partition wall; and
Fig. 12 is a schematic diagram showing a section of a conventional honeycomb structure which is parallel to a central axis.

### [Description of Reference Numerals]

1, 101: cell, 1a, 101a: predetermined cell, 1b, 101b: remaining cell, 2, 102: partition wall, 3: inner wall surface of the predetermined cell, 4: downstream layer forming film, 5, 103: plugging portion, 6a: opening end of the predetermined cell on one side, 6b: opening end of the remaining cell on the other side, 7a: one end face, 7b: the other end face, 10: formed honeycomb article, 11: downstream layer, 20: coated and dried honeycomb article, 21: honeycomb segment, 22: joining material, 23: coating material, 30: coated and dried honeycomb article having the formed plugging portion, 31: particulate matter, 32: particulate matter oxidation catalyst, 33: aggregate particles, 40, 110: honeycomb structure, 41: upstream layer of the partition wall, 42: downstream layer of the partition wall, 43: silicon carbide particle, 44: metallic silicon particle, 50: joined type honeycomb structure, 51: pore distribution of the whole partition walls, 52: pore distribution of the upstream layer of the partition wall, 53: pore distribution of the downstream layer of the partition wall, 54: average pore diameter of the downstream layer of the partition wall, P: region, G₁: exhaust gas, G₂: purified gas, x: porosity of the downstream layer, y: porosity of the upstream layer, z: arithmetic average, w: thickness of the downstream layer of the partition wall, X: one end, and Y: the other end.

### DESCRIPTION OF THE PREFERRED EMBODIMENT

Hereinafter, an embodiment of the present invention will specifically be described with reference to the drawings, but it should be understood that the present invention is not limited to the following embodiment.

### (1) Manufacturing Method of Honeycomb Structure:

### (1-1) Preparation of Formed Honeycomb Article;

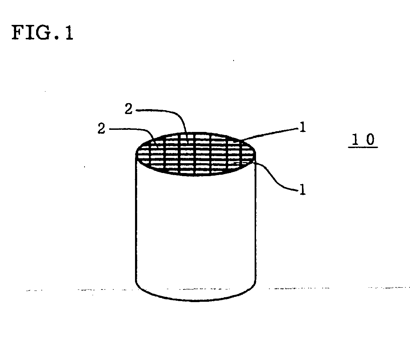

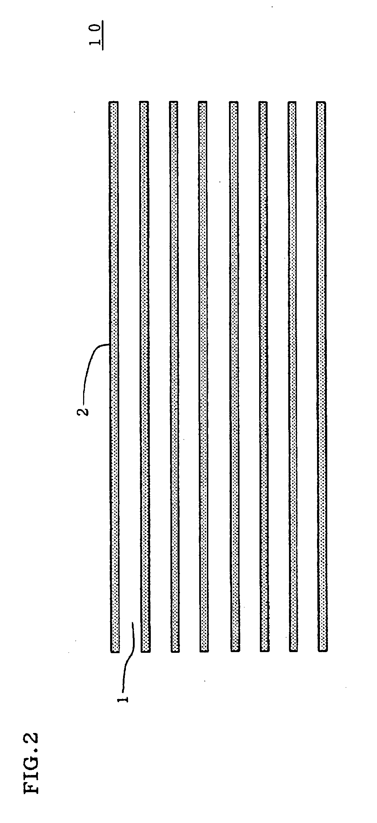

In one embodiment of a manufacturing method of a honeycomb structure of the present invention, first a forming material containing a ceramic material is formed into a honeycomb article 10 including porous partition walls 2 which separate and form a plurality of cells 1 functioning as through channels of a fluid as shown in Figs. 1 and 2. Fig. 1 is a perspective view schematically showing the formed honeycomb article obtained in an intermediate stage of the manufacturing method of the honeycomb structure of the present invention. Fig. 2 is a schematic diagram showing the section of the formed honeycomb article obtained in the intermediate stage of the manufacturing method of the honeycomb structure of the present invention, the section being parallel to a central axis.

As the ceramic material contained in the forming material, silicon carbide particles (aggregate particles), or metallic silicon and silicon carbide particles (the aggregate particles) are preferable. In consequence, the resultant honeycomb structure is excellent in strength and thermal resistance. It is to be noted that when metallic silicon and the silicon carbide particles are used as the ceramic material, the partition walls of the honeycomb structure (upstream layers of the partition walls) are formed by metallic silicon-silicon carbide based composite material formed by using the silicon carbide particles as an aggregate and metallic silicon as a bonding material. The ceramic material (the aggregate particles) has an average particle diameter of preferably 10 to 80 µm, further preferably 30 to 60 µm. The average particle diameter is a value measured by using a laser diffraction particle size distribution analyzer.

The forming material is preferably formed by mixing the ceramic material with a dispersion medium, an organic binder, an inorganic binder, a pore former, a surfactant and the like.

As the dispersion medium, water is preferable. The content of the dispersion medium is preferably 10 to 30 parts by mass with respect to 100 parts by mass of the ceramic material.

Examples of the organic binder include hydroxypropoxyl methyl cellulose and methyl cellulose. The content of the organic binder is preferably 3 to 15 parts by mass with respect to 100 parts by mass of the ceramic material.

Examples of the inorganic binder include a layered clay compound and colloidal silica. The content of the inorganic binder is preferably 0.1 to 10 parts by mass with respect to 100 parts by mass of the ceramic material.

Examples of the pore former include graphite, starch and synthetic resin. The content of the pore former is preferably 5 to 30 parts by mass with respect to 100 parts by mass of the ceramic material. The pore former has an average particle diameter of preferably 10 to 80 µm, further preferably 30 to 50 µm.

Examples of the surfactant include ethylene glycol and fatty acid soap. The content of the surfactant is preferably 0.1 to 5 parts by mass with respect to 100 parts by mass of the ceramic material.

When the particle diameters and blend amount of the ceramic material (the aggregate particles) for use and the particle diameters and blend amount of the pore former to be added are regulated, a honeycomb structure having a desired porosity and average pore diameter can be obtained.

To form the forming material into the article, first the forming material is kneaded to obtain puddle, and the resultant puddle is preferably formed into a honeycomb shape. There is not any special restriction on a method of kneading the forming material to form the puddle, and examples of the method include a method using a kneader, a vacuum pug mill or the like. There is not any special restriction on a method of forming the puddle into the honeycomb article, and a heretofore known forming method such as extrusion or injection may be used. Preferable examples of the method include a method of forming the formed honeycomb article by extrusion using a die having a desired cell shape, partition wall thickness and cell density. The preferable material of the die is a cemented carbide.

### (1-2) Preparation of Dried Honeycomb Article;

Next, the formed honeycomb article is dried to prepare a dried honeycomb article. There is not any special restriction on a drying method, but examples of the method include hot air drying, microwave drying, dielectric drying, pressure reduction drying, vacuum drying and freeze drying. Above all, the dielectric drying, the microwave drying or the hot air drying is preferably performed alone or as a combination of them. Moreover, drying conditions are preferably set to a drying temperature of 80 to 150°C and a drying time of ten minutes to one hour.

### (1-3) Preparation of Coated and Dried Honeycomb Article;

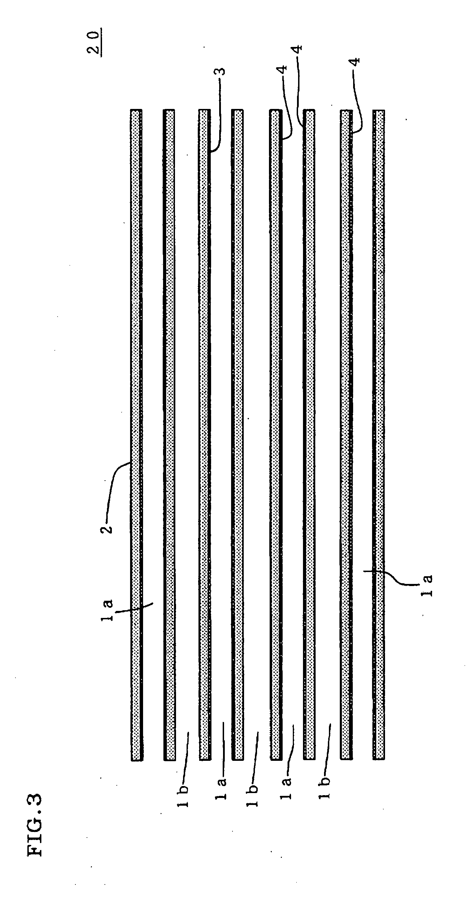

In a method outside the scope of the invention, a downstream layer forming slurry containing the ceramic material is charged into the predetermined cells of the dried honeycomb article, and then the downstream layer forming slurry is discharged to coat the inner wall surfaces of the predetermined cells (exhaust gas outflow side cells) with the downstream layer forming slurry. Afterward, the article is dried to prepare a coated and dried honeycomb article 20 in which, as shown in Fig. 3, downstream layer forming films 4 are applied onto inner wall surfaces 3 of predetermined cells 1a (coated). Here, the arrangement of the predetermined cells is preferably determined so that the predetermined cells 1a and remaining cells (cells on an exhaust gas inflow side) 1b are alternately arranged. "The remaining cells" are cells other than "the predetermined cells". Moreover, "discharging the downstream layer forming slurry" is the discharging of a surplus downstream layer forming slurry obtained by excluding (leaving) the downstream layer forming slurry to coat the inner wall surfaces of the cells from the downstream layer forming slurry charged into the cells. Fig. 3 is a schematic diagram showing the section of the coated and dried honeycomb article obtained in the intermediate stage in this manufacturing method, the section being parallel to the central axis.

The downstream layer forming slurry is preferably formed by mixing the ceramic material and water. The ceramic material contained in the downstream layer forming slurry is preferably the same as that contained in the forming material of the formed honeycomb article. In consequence, an expansion ratio during firing can be set to a ratio equal to that of the honeycomb structure (the partition walls), so that the generation of defects during the firing can be prevented, and the durability of the resultant honeycomb structure can be improved. Moreover, when deposited particulate matters are burnt, against problems that owing to a difference of thermal expansion ratio, the downstream layers facing the cells on the exhaust gas outflow side break down and that subsequently a collection performance remarkably lowers, the breakdown of the downstream layers during the burning of the particulate matters can be prevented, and an excellent collection performance can be kept. The ceramic material has an average particle diameter of preferably 3 to 50 µm, further preferably 10 to 30 µm. When the average particle diameter of the downstream layer forming slurry is thus set to a small diameter, the average pore diameter of the downstream layers can be smaller than that of the partition walls. Moreover, the content of the water is preferably 30 to 80 mass%, further preferably 40 to 70 mass% with respect to the whole downstream layer forming slurry. When the content is smaller than 30 mass%, a slurry concentration is high, fluidity lowers, and the slurry is not easily charged into the cells sometimes. When the content is larger than 80 mass%, the slurry concentration is small, and the downstream layers having desired thicknesses are not easily formed on the cell inner wall surfaces.

The downstream layer forming slurry is preferably further mixed with an organic binder, an inorganic binder, a pore former, a surfactant or the like as needed.

Examples of the organic binder include hydroxypropoxyl methyl cellulose and methyl cellulose. The content of the organic binder is preferably 0.1 to 10 parts by mass with respect to 100 parts by mass of the ceramic material.

Examples of the inorganic binder include a layered clay compound and colloidal silica. The content of the inorganic binder is preferably 0.1 to 10 parts by mass with respect to 100 parts by mass of the ceramic material.

Examples of the pore former include graphite, starch and synthetic resin. The content of the pore former is preferably 0.1 to 50 parts by mass with respect to 100 parts by mass of the ceramic material. The pore former has an average particle diameter of preferably 1 to 15 µm, further preferably 3 to 10 µm. The average particle diameter of the pore former is a value measured by the same method as the method used for measuring the average particle diameter of the ceramic material.

Examples of the surfactant include ethylene glycol and fatty acid soap. The content of the surfactant is preferably 0.1 to 5 parts by mass with respect to 100 parts by mass of the ceramic material.

When the particle diameters and blend amount of the ceramic material for use and the particle diameters and blend amount of the pore former to be added are regulated, the downstream layers having a desired porosity and average pore diameter can be obtained.

Examples of a method of charging the downstream layer forming slurry into the predetermined cells of the dried honeycomb article include a method of supplying the downstream layer forming slurry from the opening ends of the predetermined cells to be provided with the downstream layers by use of a slurry supply tube having a diameter (the outer diameter) smaller than a cell diameter to charge the downstream layer forming slurry into the whole predetermined cells. Moreover, the examples include a method of closing the opening ends of the remaining cells in which any downstream layer is not formed on one side with a mask, and then supplying the downstream layer forming slurry to the whole end face of the dried honeycomb article on a side provided with the mask, thereby allowing the downstream layer forming slurry to flow into the predetermined cells which are not covered with the mask from the opening ends of the cells. To obtain the mask, it is preferable to use a method of attaching an adhesive film and partially making holes in the adhesive film or the like. Moreover, examples of a method of supplying the downstream layer forming slurry to the whole end face of the dried honeycomb article include a method of immersing the dried honeycomb article into the downstream layer forming slurry and a method of allowing the downstream layer forming slurry to flow from the end face of the dried honeycomb article.

To discharge the downstream layer forming slurry charged into the predetermined cells, it is preferable that the article is left to stand and the surplus downstream layer forming slurry is discharged owing to the own weight of the slurry, or that the surplus downstream layer forming slurry is discharged by air blowing or the like.

There is not any special restriction on a method of drying the dried honeycomb article in which the inner wall surfaces of the predetermined cells are coated with the downstream layer forming slurry (the slurry is attached to the surfaces) to obtain the coated and dried honeycomb article, but examples of the method include hot air drying, microwave drying, dielectric drying, pressure reduction drying, vacuum drying and freeze drying. Moreover, drying conditions are preferably set to a temperature of 80 to 150°C and a time of ten minutes to one hour.

### (1-4) Forming of Plugging Portions:

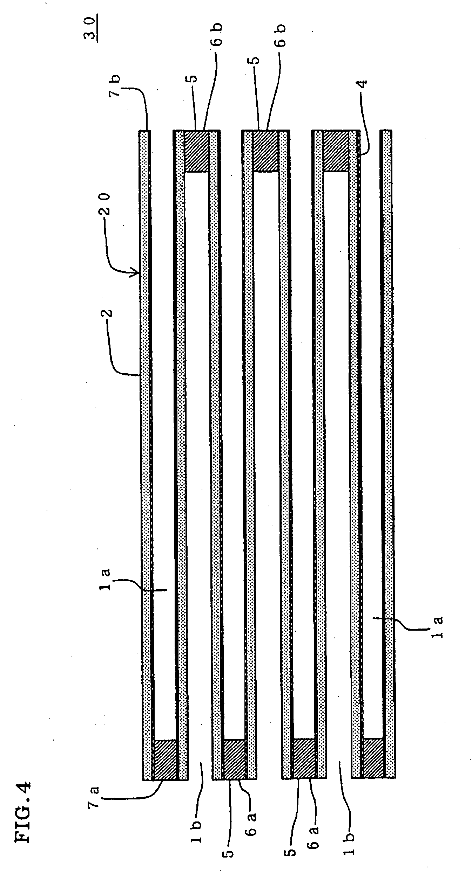

Next, as shown in Fig. 4, also in a method outside the scope of the invention, in the resultant coated and dried honeycomb article 20, plugging portions 5 are formed in opening ends 6a of the predetermined cells 1a on one side and opening ends 6b of the remaining cells 1b arranged alternately with the predetermined cells 1a on the other side, to obtain a coated and dried honeycomb article 30 having the formed plugging portions. Fig. 4 is a schematic diagram showing the section of the coated and dried honeycomb article in the intermediate stage in this method, the section being parallel to the central axis.

In a method of forming the plugging portions, in one end face 7a of the resultant coated and dried honeycomb article 20, the remaining cells 1b (the opening ends of the remaining cells) are provided with the masks, the one end face 7a is immersed into a storage container in which a plugging material is received, and the plugging material is inserted into the predetermined cells 1a which are not covered with any mask, to form the plugging portions 5. Then, in the other end face 7b of the coated and dried honeycomb article 20, the predetermined cells 1a (the opening ends of the predetermined cells), which are not covered with any mask in the end face 7a, are covered with the masks, the other end face 7b is inserted into the storage container in which the plugging material is received, and the plugging material is inserted into the remaining cells 1b which are not covered with any mask, to form the plugging portions 5. Since the predetermined cells 1a and the remaining cells 1b are alternately arranged, in both end faces of the coated and dried honeycomb article 20, a checkered pattern is formed by the plugging portions 5, and the opening ends of the cells which do not have the formed plugging portions.

There is not any special restriction on a method of covering each cell opening end with the mask, but examples of the method include a method of attaching an adhesive film to the whole end face of the honeycomb structure and partially making holes in the adhesive film. More specifically, it is possible to preferably use a method of attaching the adhesive film to the whole end face of the honeycomb structure, and making holes only in portions of the film corresponding to the cells to be provided with the plugging portions by laser or the like. As the adhesive film, it is possible to preferably use a film made of a resin such as polyester, polyethylene or a thermosetting resin and having one surface coated with an adhesive or the like.

It is to be noted that as the plugging material, the same material as a material forming the formed honeycomb article is preferably used. In consequence, an expansion ratio during firing can be set to a ratio equal to that of the honeycomb structure, so that the generation of defects during the firing can be prevented, and the durability of the resultant honeycomb structure can be improved.

### (1-5) Preparation of Honeycomb Structure;

### (1-5-1) Firing;

Next, the coated and dried honeycomb article having the formed plugging portions is fired, to prepare the honeycomb structure in which the porous downstream layers having an average pore diameter smaller than that of the partition walls are applied onto the inner wall surfaces of the predetermined cells and which has the formed plugging portions.

Drying and calcinating are preferably performed before firing the coated and dried honeycomb article having the formed plugging portions. Drying conditions are preferably set to a temperature of 80 to 150°C and a time of five minutes to two hours.

The calcinating is performed for degreasing, and there is not any special restriction on a calcinating method, as long as organic matters (the organic binder, a dispersant, the pore former, etc.) can be removed from the dried honeycomb article having the formed plugging portions. In general, the organic binder has a burning temperature of about 100 to 300°C, and the pore former has a burning temperature of about 200 to 800°C, so that calcinating conditions are preferably set to heating at about 200 to 1000°C for about three to 100 hours in an oxidation atmosphere.

Next, the coated and dried honeycomb article having the formed plugging portions is fired (finally fired) to prepare the honeycomb structure having the formed plugging portions. This "final firing" is an operation for sintering and densifying the forming material constituting the formed and calcinated article to secure a predetermined strength. Firing conditions (the temperature/the time) vary in accordance with the type of the forming material, and hence appropriate conditions may be selected in accordance with the type. For example, in the case of the metallic silicon-silicon carbide mixed material obtained by mixing SiC powder and metallic silicon powder at a mass ratio of 80:20, the article may be fired in a temperature range of 1400 to 1800°C in an inactive atmosphere such as an argon atmosphere. When the firing temperature is set to 1400°C or more, the metallic silicon powder can be softened, and hence silicon carbide particles can be bonded to one another via metallic silicon. When the firing temperature exceeds 1800°C, the evaporation of metallic silicon advances, and hence it is difficult to bond the silicon carbide particles to one another via metallic silicon sometimes.

### (1-5-2) Loading of Catalyst;

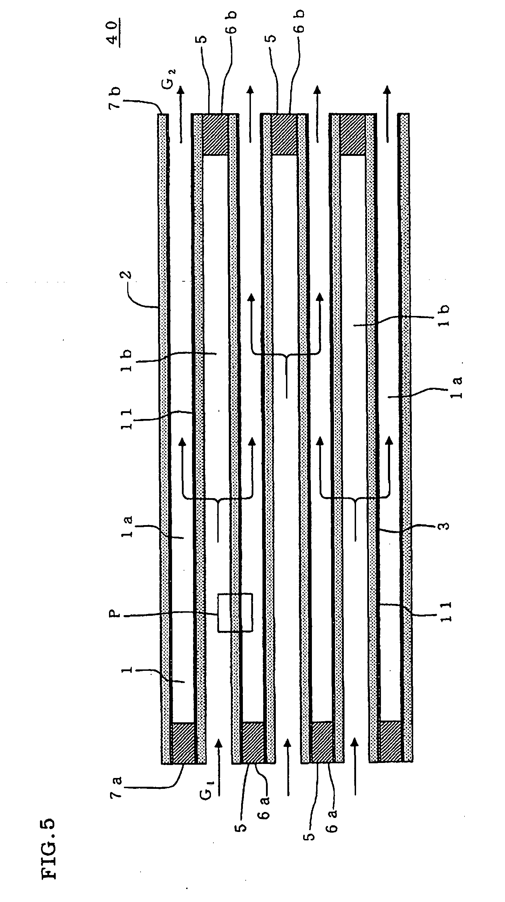

A catalyst is preferably loaded in the honeycomb structure. As described later, a particulate matter oxidation catalyst is preferably loaded on the partition walls 2, and an exhaust gas purification catalyst is preferably loaded on downstream layers 11 (see Fig. 5). Hereinafter, the partition walls 2 are referred to as "the upstream layers 2 of the partition walls", and the downstream layers 11 are referred to as "the downstream layers 11 of the partition walls" sometimes.

The upstream layers of the partition walls have large pore diameters sufficient for loading the catalyst or coating the structure with the catalyst, and hence the catalyst can be loaded in a region where the particulate matters are collected and deposited (the whole upstream layers of the partition walls). Therefore, the particulate matter oxidation catalyst is efficiently brought into contact with the particulate matters, and the oxidation treatment of the collected particulate matters can quickly be performed. The loading amount of the particulate matter removing catalyst is preferably 15 to 180 g/liter.

As the oxidation catalyst, a noble metal such as platinum (Pt), palladium (Pd) or rhodium (Rh) is preferably used. In addition, the noble metal, another catalyst or purification material may further be loaded. For example, an NOx storage reduction catalyst, a three-way catalyst, a co-catalyst, a hydrocarbon (HC) adsorber or the like may be loaded. Examples of the NOx storage reduction catalyst include alkali metals such as Li, Na, K and Cs and alkali earth metals such as Ca, Ba and Sr. Examples of the co-catalyst include an oxide of cerium (Ce), an oxide of zirconium (Zr), a mixture of them and a composite oxide.

For example, the oxidation catalyst may include a rare earth composite oxide to which, in addition to Ce, at least one rare earth metal, alkali earth metal or transition metal has been added. Examples of the rare earth metal include Sm, Gd, Nd, Y, La and Pr.

There is not any special restriction on a method of loading a catalyst component, but examples of the method include a method of washcoating the upstream layers of the partition walls of the honeycomb structure with a catalyst solution including the catalyst component, and then thermally treating and baking the structure at a high temperature. Moreover, catalyst layers may be formed on the surfaces of particles constituting the upstream layers of the partition walls or in the pores of the upstream layers of the partition walls by a method of attaching a ceramic slurry to the surfaces of the upstream layers of the partition walls of the honeycomb structure or in the upstream layers of the partition walls, followed by drying and a thermal treatment, by use of a heretofore known ceramic film forming method such as a dipping process or a suction process. The amount or shape of the catalyst to be loaded can be regulated to a desired value by controlling the concentration of the catalyst solution, a coating time or the like.

It is to be noted that the catalyst component is loaded in a highly dispersed state. Therefore, after once loading the component on thermally resistant inorganic oxide having a large specific surface area, for example, γ -alumina, the component is preferably loaded on the upstream layers of the partition walls of the honeycomb structure.

Since the downstream layers of the partition walls have an average pore diameter smaller than that of the upstream layers of the partition walls, the particulate matters can securely be collected. That is, the particulate matters flowing into the pores of the upstream layers of the partition wall cannot flow into the downstream layers of the partition walls having a small average pore diameter, and the particulate matters can be prevented from passing through the downstream layers of the partition walls to a predetermined cell side. Moreover, the particulate matters flowing into the pores of the upstream layers of the partition walls are stopped by the downstream layers of the partition walls, and are deposited in the pores of the upstream layers of the partition walls. Therefore, the amount of the particulate matter oxidation catalyst to be loaded on the downstream layers of the partition walls can be decreased. Since the amount of the oxidation catalyst can be decreased, "the exhaust gas purification catalyst" for removing an unburnt gas from the exhaust gas can be loaded on the downstream layers of the partition walls instead.

Here, "the exhaust gas purification catalyst" mentioned in the present embodiment is a catalyst component having an effect of purifying the exhaust gas, and includes all the catalysts for promoting the removal of harmful components such as nitrogen oxide, hydrocarbon and carbon monoxide included in the exhaust gas. Examples of the catalyst also include the oxidation catalyst for oxidizing nitrogen oxide, the three-way catalyst for simultaneously performing the reduction of nitrogen oxide and the oxidation of hydrocarbon or carbon monoxide, and further the NOx storage reduction catalyst. The loading amount of the exhaust gas purification catalyst is preferably 15 to 180 g/liter.

As the oxidation catalyst for use as this exhaust gas purification catalyst, a noble metal such as platinum (Pt), palladium (Pd) or rhodium (Rh) is preferably used.

It is to be noted that when the oxidation catalyst is loaded as the exhaust gas purification catalyst, another catalyst or a purification material may further be loaded. For example, the NOx storage reduction catalyst, the three-way catalyst, the co-catalyst, the hydrocarbon (HC) adsorber or the like may be loaded. Examples of the NOx storage reduction include alkali metals such as Li, Na, K and Cs and alkali earth metals such as Ca, Ba and Sr. Examples of the co-catalyst include an oxide of cerium (Ce), an oxide of zirconium (Zr), a mixture of them and a composite oxide.

The total amount of the oxidation catalyst is preferably 15 to 180 g/liter (the honeycomb structure), further preferably 15 to 50 g/liter. When the amount is smaller than 15 g/liter, a regeneration efficiency decreases, the catalyst amount is not sufficient, and gas emission might not reach 100%. Moreover, when the amount is larger than 180 g/liter, the catalyst closes the pores of the upstream layers of the partition walls, and a trouble of soot loading pressure drop easily occurs sometimes. When the soot loading pressure drop increases, in the case of actual running, an output during vehicle acceleration lowers, and hence practicality becomes poor sometimes. Therefore, when the range of the total amount of the oxidation catalyst is set to "15 to 180 g/liter", the increase of a cost burden can be prevented, the lowering of the strength of the whole filter (cracks or the like during regeneration) might not be caused, the loaded catalyst sufficiently functions, and the regeneration efficiency of the whole catalyst loading filter can be improved.

There is not any special restriction on a method of loading the catalyst component, but examples of the method include a method of washcoating the downstream layers of the partition walls of the honeycomb structure with a catalyst solution including the catalyst component, and then thermally treating and baking the structure at a high temperature. Moreover, catalyst layers may be formed on the surfaces of particles constituting the downstream layers of the partition walls or in the pores of the downstream layers of the partition walls by a method of attaching the ceramic slurry to the surfaces of the downstream layers of the partition walls of the honeycomb structure or in the downstream layers, followed by drying and the thermal treatment, by use of a heretofore known ceramic film forming method such as the dipping process or the suction process. The amount or shape of the catalyst to be loaded can be regulated to the desired value by controlling the concentration of the catalyst solution, a coating time or the like.

It is to be noted that the catalyst component is loaded in the highly dispersed state. Therefore, after once loading the component on thermally resistant inorganic oxide having a large specific surface area, for example, γ -alumina, the component is preferably loaded on the partition walls of the honeycomb structure or the like.

### (1-6) An Embodiment of Manufacturing Method of Honeycomb Structure of the present Invention

In the above method of manufacturing the honeycomb structure, the downstream layer forming films are applied onto the dried honeycomb article to form the coated and dried honeycomb article, and then the plugging portions are formed. However, as an embodiment of the method of the present invention, after forming the plugging portions in a dried honeycomb article, downstream layer forming films are applied onto the dried honeycomb article having the formed plugging portions, to form the coated and dried honeycomb article. In this case, as described above, after forming the plugging portions in the dried honeycomb article, a downstream layer forming slurry is preferably supplied from opening ends of predetermined cells to be provided with downstream layers. Moreover, the downstream layer forming slurry may be supplied from the opening ends of the predetermined cells by use of a slurry supply tube having a diameter (the outer diameter) smaller than a cell diameter. Even in a case where the plugging portions are formed in the dried honeycomb article and then the downstream layer forming films are applied to form the coated and dried honeycomb article, a preparation method of the dried honeycomb article, a forming method of the plugging portions, an applying method of the downstream layer forming films and a loading method of a catalyst are preferably similar to those in the manufacturing method of the honeycomb structure described above.

### (2) Honeycomb Structure:

As shown in Figs. 5, 6, the honeycomb structure obtained by the embodiment of the manufacturing method of the present invention is a honeycomb structure 40 including porous partition walls 2 which partition the structure into a plurality of cells 1 as through channels of a fluid, porous downstream layers 11 applied onto inner wall surfaces 3 of predetermined cells 1a and having an average pore diameter smaller than that of the partition walls 2, and plugging portions 5 arranged in opening ends 6a of the predetermined cells 1a on one side and opening ends 6b of remaining cells 1b alternately arranged with the predetermined cells 1a on the other side. That is, the honeycomb structure 40 has a structure in which the downstream layers 11 and the plugging portions 5 are applied onto a porous base material having a honeycomb shape formed by partition walls 2. Fig. 5 is a schematic diagram showing the section of the honeycomb structure 40, the section being parallel to a central axis. Fig. 6 is a schematic diagram in which a region P of Fig. 5 is enlarged. When an exhaust gas is purified by using the honeycomb structure 40, an exhaust gas G₁ flows into the remaining cells 1b from the opening ends thereof on the side of one end face 7a, the exhaust gas G₁ passes through the partition walls 2 and the downstream layers 11 (passes through pores) to flow into the predetermined cells 1a, and an exhaust gas (the purified gas) G₂ purified by the partition walls 2 and the downstream layers 11 is discharged from the opening ends of the predetermined cells 1a on the side of the other end face 7b. Therefore, the remaining cells 1b are cells on an exhaust gas inflow side, and the predetermined cells 1a are cells on an exhaust gas outflow side.

### (2-1) Upstream Layers of Partition Walls;

"The upstream layers 2 of the partition walls" function as particulate matter depositing layers, and has a structure having a plurality of pores in which an oxidation catalyst for promoting the oxidation of particulate matters can be loaded or which can be coated with the catalyst. "The upstream layers 2 of the partition walls" have an average pore diameter of preferably 35 to 80 µm, further preferably 35 to 60 µm. In such a pore diameter range, a particulate matter oxidation catalyst loaded on the whole "upstream layers 2 of the partition walls" does not come in local contact with the particulate matters but can entirely come in contact with the particulate matters. That is, when the whole particulate matter oxidation catalyst is brought into contact with not only the surface layers of "the upstream layers 2 of the partition walls" but also the particulate matters, the particulate matters can be oxidized and removed in a short time, and hence a fuel consumption loss can be minimized. Moreover, the only surface layers of "the upstream layers 2 of the partition walls" can be prevented from locally having a high temperature. Furthermore, it is possible to prevent the increase of a pressure drop due to the insufficient oxidation and removal of the particulate matters. When the average pore diameter of "the upstream layers 2 of the partition walls" is smaller than 35 µm, the particulate matters are so-called inner lids in the upper portions of the pores of the upstream layers of the partition walls (an inlet on a gas inflow side or near the inlet), the pores are easily clogged, and the particulate matters cannot easily come in contact with the oxidation catalyst. When the average pore diameter is larger than 80 µm, it becomes difficult to load the particulate matter oxidation catalyst. Alternatively, even if the particulate matter oxidation catalyst can be loaded, the particulate matters do not come in contact with the particulate matter oxidation catalyst, and flow into the downstream layers of the partition walls as they are to clog the downstream layers of the partition walls, whereby the pressure drop easily increases sometimes. The average pore diameter is a value measured by using a mercury porosimeter after grinding and removing the downstream layers of the partition walls.

Moreover, "the upstream layers 2 of the partition walls" have a porosity of preferably 40 to 90%, further preferably 50 to 80%. In a case where "the upstream layers 2 of the partition walls" have porosity less than 40%, when the particulate matters are collected, the ratio of the volume of the deposited particulate matters with respect to pore capacities increases. Therefore, it becomes difficult to perform a regenerating operation of the filter sometimes. Furthermore, the pressure drop increases sometimes. Moreover, when the porosity exceeds 90%, the strengths of the partition walls come short sometimes. In consequence, the strength of the honeycomb structure decreases, and it becomes difficult to perform canning sometimes. The porosity is a value calculated from a space/solid area ratio obtained by photographing an image of the sections of the partition walls by use of a scanning electron microscope (SEM).

### (2-2) Downstream Layers of Partition Walls;

"The downstream layers 11 of the partition walls" are layers each provided on the predetermined cell 1a (exhaust gas outflow side cell) side of "the upstream layer 2 of the partition wall" constituting a porous base material having a honeycomb shape, and are regions where the average pore diameter is set to a value smaller than that of "the upstream layers 2 of the partition walls" in order to collect the particulate matters. When the average pore diameter of the "the downstream layers 11 of the partition walls" is set to a value smaller than that of "the upstream layers 2 of the partition walls" in this manner, even the particulate matters capable of passing through the pores of "the upstream layers 2 of the partition walls" cannot pass through "the downstream layers 11 of the partition walls", so that the particulate matters can securely be collected by "the downstream layers 11 of the partition walls". In consequence, the particulate matters can be prevented from being discharged to the cells (the predetermined cells 1a) on the exhaust gas outflow side.

It is to be noted that each partition wall constituting the honeycomb structure 40 preferably has a double-layer structure including "the upstream layer of the partition wall" and "the downstream layer of the partition wall", but may have a three or more layer structure including an intermediate layer having a different average pore diameter between "the upstream layer of the partition wall" and "the downstream layer of the partition wall".

"The downstream layers 11 of the partition walls" have an average pore diameter of preferably 1 to 15 µm, further preferably 3 to 10 µm. When the average pore diameter is less than 1 µm, a permeation resistance increases sometimes. When the average pore diameter is larger than 15 µm, a collection performance lowers, the particulate matters are easily discharged to the cells (the predetermined cells 1a) on the exhaust gas outflow side sometimes, and PM emission easily exceeds the Euro 5 regulated value of European regulation sometimes. The average pore diameter is a value measured using the mercury porosimeter by a method described later (a measurement method of (the average pore diameter of the downstream layers) in an example).

"The downstream layers 11 of the partition walls" have porosities of preferably 20 to 80%, further preferably 30 to 60%. When the porosities are smaller than 20%, a pressure drop at a time when the gas passes through the pores increases sometimes. When the porosities are larger than 80%, "the downstream layers 11 of the partition walls" become brittle or the collection of the particulate matters becomes insufficient sometimes. The porosities of "the downstream layers 11 of the partition walls" may appropriately be selected from the viewpoints of the pressure drop and the collection performance in consideration of layer thicknesses. The porosity is a value calculated from the space/solid area ratio obtained by photographing the image of the sections of the partition walls by use of the scanning electron microscope (SEM).

### (2-3) Structure of Cells and the like;

The whole shape of the honeycomb structure 40 shown in Fig. 5 is a cylindrical shape, but the whole shape of the honeycomb structure obtained by the manufacturing method of the present invention is not limited to this example, and examples of the shape include a cylinder shape, a quadrangular post shape and a triangular post shape.

There is not any special restriction on the shape of the cell section (the section which is vertical to the central axis direction of a post (cylinder)-like article) in the honeycomb structure obtained by the method of the present invention, but examples of the shape include polygonal shapes such as a triangular shape, a quadrangular shape and a hexagonal shape, a combination of an octagonal shape and the quadrangular shape, a circular shape, an elliptic shape, a racing track-like shape, and partially deformed shapes of these shapes. From the viewpoint of ease of preparation, the cell sectional shape is preferably the triangular shape, the quadrangular shape, the hexagonal shape or the combination of the octagonal shape and the quadrangular shape. In the case of the combination of the octagonal shape and the quadrangular shape, when octagonal cells are disposed on a fluid inlet side, a surface area on the fluid inlet side can be increased, and the amount of the particulate matters to be collected can be increased.

In the honeycomb structure obtained by the method of the present invention, a cell density is preferably 15 cells/cm² or more and less than 65 cells/cm², and partition wall thicknesses are preferably 200 µm or more and less than 1000 µm. The pressure drop during the deposition of the particulate matters is decreased, as a filter area is large. Therefore, the pressure drop during the deposition of the particulate matters decreases, as the cell density is large. On the other hand, an initial pressure drop increases, when the hydraulic diameters of the cells are decreased. In consequence, the cell density is preferably large from the viewpoint of the decrease of the pressure drop during the deposition of the particulate matters, but the cell density is preferably small from the viewpoint of the decrease of the initial pressure drop. When the partition wall thicknesses are increased, a collection efficiency improves, but the initial pressure drop increases. When the initial pressure drop, the pressure drop during the deposition of the particulate matters and the tradeoff of the collection efficiency are taken into consideration, the ranges of the cell density and partition wall thicknesses satisfying all the requirements are the above-mentioned ranges. Moreover, in the above ranges of the cell density and the partition wall thicknesses, after forming and drying the formed honeycomb article and forming the upstream layers of the partition walls, the partition walls of the article can be coated with a downstream layer forming slurry including the ceramic material to form the downstream layers of the partition walls, followed by firing, to prepare the honeycomb structure.

To purify the exhaust gas by use of the honeycomb structure 40, as shown in Fig. 5, the exhaust gas G₁ is allowed to flow into the remaining cells 1b opened toward the end face of the honeycomb structure on the exhaust gas inflow side (the end face 7a), and the exhaust gas G₁ is allowed to pass through the partition walls 2 and the downstream layers 11. When the exhaust gas G₁ passes through the partition walls 2 and the downstream layers 11, the particulate matters in the exhaust gas G₁ are collected by the partition walls 2 and the downstream layers 11. Afterward, the exhaust gas (the purified gas) G₂, from which the particulate matters have been removed, flows out of the exhaust gas outflow side cells (the predetermined cells 1a) opened toward the exhaust gas outflow side end face (the other end face 7b).

In the honeycomb structure 40, the catalyst is preferably loaded on "the upstream layers 2 of the partition walls" and "the downstream layers 11 of the partition walls". The type and amount of the catalyst to be loaded are preferably the same as those of the catalyst loaded in the above embodiment of the manufacturing method of the present invention.

### (2-4) State at a time when the particulate matters are collected;

There will further specifically be described a behavior in which the "the upstream layers 2 of the partition walls" and "the downstream layers 11 of the partition walls" cooperate while performing the purification treatment of the exhaust gas, with reference to Fig. 7. As shown in Fig. 7, the exhaust gas G₁ enters the cells (the remaining cells) on the exhaust gas inflow side, flows into the partition walls from the surfaces of "the upstream layers 2 of the partition walls", passes through "the downstream layers 11 of the partition walls", and is discharged as the exhaust gas (the purified gas) G₂ into the cells (the predetermined cells) on the exhaust gas outflow side. At this time, particulate matters 31 contained in the exhaust gas G₁ are collected in "the upstream layers 2 of the partition walls". The surfaces of "the upstream layers 2 of the partition walls" and the insides of the pores are coated with a particulate matter oxidation catalyst 32. In Fig. 7, the surfaces of aggregate particles 33 constituting "the upstream layers 2 of the partition walls" are coated with the particulate matter oxidation catalyst 32. In Fig. 7, a diagram shown on the left side is a schematic diagram showing the section of the honeycomb structure obtained by the manufacturing method of the present invention, the section being parallel to the thickness direction of "the upstream layer 2 of the partition wall" and "the downstream layer 11 of the partition wall", and a graph shown on the right side is a graph schematically showing the deposited amount (the existing amount) of the particulate matters in positions of "the upstream layer 2 of the partition wall" and "the downstream layer 11 of the partition wall" in the thickness direction. In this graph, the x-axis (the horizontal axis) indicates the deposited amount of the particulate matters, and the y-axis (the vertical axis) indicates the positions in the thickness direction (the position). Thus, in the honeycomb structure, the particulate matters are entirely collected (present) in the thickness direction of "the upstream layer 2 of the partition wall". Therefore, in the whole "upstream layer 2 of the partition wall", the particulate matters come in contact with the particulate matter oxidation catalyst, and the particulate matters can efficiently be subjected to an oxidation treatment.

### (3) Joined Type Honeycomb Structure:

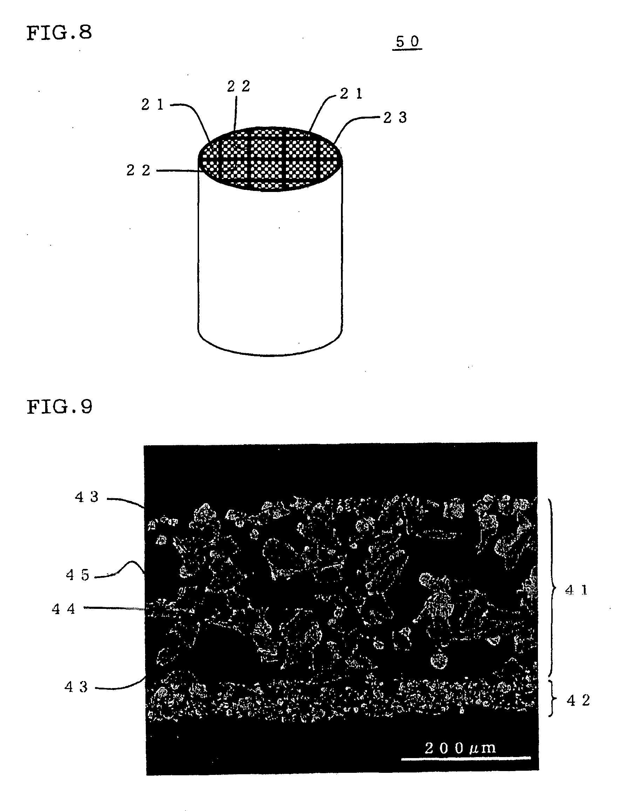

A plurality of honeycomb structures are prepared by the method of the present invention, the resultant plurality of honeycomb structures (honeycomb segments 21) are joined by using a joining material 22, and the outer peripheral surface of the honeycomb structures may be cut and processed into a desired shape to prepare a honeycomb structure of a joined type (the joined type honeycomb structure) 50 as shown in Fig. 8. Each honeycomb segment preferably has a quadrangular post-like shape. To join the honeycomb segments, the outer peripheral surface of each honeycomb segment is coated with the joining material, and the honeycomb segments are assembled with one another and pressed, preferably followed by heating and drying. A joined honeycomb segment article obtained by joining the honeycomb segments together entirely has the quadrangular post-like shape. Therefore, to obtain the joined type honeycomb structure entirely having a cylindrical shape as shown in Fig. 8, the outer peripheral surface of the structure is preferably cut and processed. Then, the cut and processed outer peripheral surface of the structure can be coated with a coating material 23, and then subjected to a thermal treatment at about 700°C for about two hours to obtain the joined type honeycomb structure. Fig. 8 is a perspective view schematically showing the joined type honeycomb structure obtained by joining the honeycomb structures manufactured by the manufacturing method of the present invention.

Preferable examples of the joining material 22 include a material constituted of an inorganic fiber, an inorganic binder, an organic binder and inorganic particles. Examples of the inorganic fiber include oxide fibers of aluminosilicate, magnesium silicate, alumina and the like, and another fiber (e.g., a SiC fiber). Examples of the inorganic binder include a silica sol, an alumina sol and clay. Examples of the organic binder include polyvinyl alcohol, carboxymethyl cellulose and methyl cellulose. Examples of the inorganic particles include particles of ceramic materials such as silicon carbide, silicon nitride, cordierite, alumina and mullite.

Preferable examples of the coating material 23 include the material constituted of the inorganic fiber, the inorganic binder, the organic binder and the inorganic particles. The same material as the joining material 22 may be used, or coating properties may be taken into consideration to regulate the composition and water ratio of the material.

### [Examples]

Hereinafter, the method described above which is outside the scope of present invention will more specifically be illustrated with respect to examples.

### (Example 1, not within the invention)

### Preparation of formed honeycomb article:

As a raw material, mixed powder containing 80 mass% of SiC powder and 20 mass% of metallic Si powder was used, and hydroxypropoxyl methyl cellulose as an organic binder, starch and acrylic acid based polymer resin as pore formers, further a surfactant and water were added to the raw material, to prepare a puddle having plasticity. The resultant puddle was subjected to extrusion forming by an extrusion forming machine, and dried with microwaves and hot air, to obtain a formed honeycomb article having partition wall thicknesses of 450 µm, a cell density of about 31 cells/cm² (200 cells/square inch), a square section with one side of 35 mm and a length of 178 mm. The particle diameters of the respective materials and the amounts of the materials to be added were regulated so that the porosities and average pore diameter of the resultant upstream layers of partition walls were values described later.

### Forming of downstream layers:

An organic binder, a pore former, a surfactant and water were added to mixed powder containing 80 mass% of SiC powder and 20 mass% of metallic Si powder to prepare a downstream layer forming slurry. The particle diameters of the respective materials and the amounts of the materials to be added were regulated so that the porosities and average pore diameter of the resultant downstream layers of the partition walls were values described later. The prepared downstream layer forming slurry was fed into predetermined cells from opening ends of the cells on one side, the downstream layer forming slurry was charged into the predetermined cells, and a surplus slurry was removed, thereby obtaining a state in which the inner wall surfaces of the predetermined cells were coated with the downstream layer forming slurry, followed by drying, to prepare a coated and dried honeycomb article. It is to be noted that the predetermined cells and the remaining cells were alternately arranged.

### Forming of plugging portions:

Plugging portions were disposed in both cell end faces of the coated and dried honeycomb article so that the plugging portions and cell open frontal areas formed checkered patterns in the faces. The plugging portions were formed of the same material as that forming the formed honeycomb article. A method of forming the plugging portions was as follows. In one end face of the resultant coated and dried honeycomb article, the remaining cells (the opening ends of the remaining cells) were covered with a mask, the one end face was immersed into a storage container where a plugging material was received, and the plugging material was inserted into the predetermined cells which were not covered with any mask, to form the plugging portions. Then, in the other end face of the coated and dried honeycomb article, the predetermined cells (the opening ends of the predetermined cells), which were not covered with any mask in the one end face, were covered with the mask, the other end face was immersed into the storage container where the plugging material was received, and the plugging material was inserted into the remaining cells which were not covered with any mask, to form plugging portions 5.

### Firing:

The article was subjected to calcination for degreasing in an oxidation atmosphere at 550°C for three hours. Subsequently, the article was fired in an argon inactive atmosphere at a firing temperature of 1450°C for two hours, and SiC crystal particles were bonded via Si, to obtain a honeycomb structure (a sintered article). The resultant honeycomb structure was a honeycomb structure in which porous downstream layers having an average pore diameter smaller than that of the partition walls were applied onto the inner wall surfaces of the predetermined cells and which had the formed plugging portions. By the above method, 16 honeycomb structures in total were prepared.

### Preparation of joined type honeycomb structure:

SiC powder as inorganic particles, an aluminosilicate fiber as an oxide fiber, an aqueous silica sol solution as a colloidal oxide and clay were mixed, respectively, water was further added to the materials, and the materials were mixed by a mixer for 30 minutes, to obtain slurry for joining material layers. Then, the honeycomb segment outer peripheral wall of each of the resultant 16 honeycomb structures (honeycomb segments) was coated with the joining material layer slurry having a thickness of about 1 mm, to form the joining material layer, and another honeycomb segment was disposed on the layer. This step was repeated, and a laminated article constituted of 4x4 combination of 16 honeycomb segments was prepared. Then, an external pressure was applied to the laminated article to join the whole laminated article, and then the laminated article was dried at 120°C for two hours, to obtain a joined honeycomb segment article in which the 16 honeycomb segments were bonded via the joining material layers. Then, after processing the joined honeycomb segment article into a cylindrical outer shape, the article was coated with an outer periphery coating slurry, dried at 700°C for two hours, and hardened, to obtain a joined type honeycomb structure having a dimension of φ144 mm x 178 mm. As the outer periphery coating slurry, the same slurry as the slurry for the joining material layers was used.

### Scanning electron microscope (SEM) photograph:

As to the resultant joined type honeycomb structure, an SEM photograph was taken. Results are shown in Fig. 9. In Fig. 9, a white (light gray) portion was metallic silicon 44, gray (dark gray) portions were silicon carbide particles 43 and black portions were pores 45. It is seen from Fig. 9 that "a downstream layer 42 of a partition wall" having pore diameters smaller than those of "an upstream layer 41 of the partition wall" is formed on one surface of "the upstream layer 41 of the partition wall". Fig. 9 is an SEM photograph of a section of each partition wall (the upstream layer of the partition wall and the downstream layer of the partition wall) of the joined type honeycomb structure of Example 1, the section being parallel to a thickness direction.

Moreover, as to the resultant joined type honeycomb structure, the porosities, thicknesses and average pore diameters of the upstream layer of the partition wall (referred to simply as "the upstream layer" sometimes) and the downstream layer of the partition wall were measured. Results are shown in Table 1. In Table 1, "pore diameters" means "the average pore diameter".

### (Porosity of Upstream Layer)

The image of the section of each partition wall of the joined type honeycomb structure was taken by using an SEM. In a position (a region from the surface of the partition wall on an inlet side (an exhaust gas inflow side in the thickness direction of the partition wall) to the center of the partition wall) sufficiently away from the surface of the partition wall on an outlet side (an exhaust gas outflow side in the thickness direction of the partition wall), the space/solid area ratios of 20 square view fields (one side of a square was 1/1000 of the thickness of the partition wall) were measured, respectively, and the measurement results were averaged, to obtain the porosity of the upstream layer.

### (Porosity of Downstream Layer)

The image of the section of the partition wall of the joined type honeycomb structure was taken by using the SEM. In each region divided in parallel with the partition wall surface from a region near the surface of the partition wall on the outlet side (the thickness of each region was 1/50 of that of the partition wall), the space/solid area ratios of 20 square view fields (one side of a square was 1/1000 of the thickness of the partition wall) were measured, respectively, and the resultant space/solid area ratios were averaged for each region. Then, as to three regions near the surface of the partition wall on the outlet side, excluding one region closest to the outlet-side surface of the partition wall, "the average values of the space/solid area ratios" in the regions were averaged (an average value of the three regions was obtained), and the resultant average value was obtained as the porosity of the downstream layer.

### (Thickness of Upstream Layer)

The image of the section of the partition wall of the joined type honeycomb structure was taken by using the SEM, and the thickness was measured through the image.

### (Thickness of Downstream Layer)

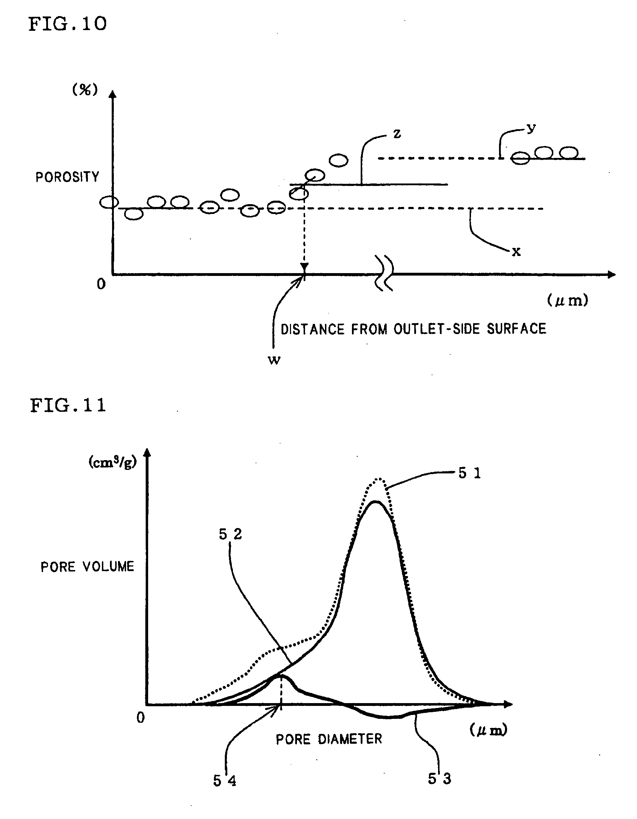

The image of the section of the partition wall of the joined type honeycomb structure was taken by using the SEM. A region (a region from the surface of the partition wall on the outlet side to the center of the partition wall) having a thickness of a half of a partition wall thickness was divided into 1000 regions in the thickness direction, and the porosity of the square in each divided region was measured as the space/solid area ratio of the image from the region near the surface of the partition wall on the outlet side, and the average value of 20 view fields was plotted for each distance with respect to the distance from the outlet-side surface (Fig. 10). Then, as a thickness w of the downstream layer of the partition wall, there was obtained the distance of a position where a straight line formed by an arithmetic average z ((x+y)/2) of a porosity x of the downstream layer and a porosity y of the upstream layer intersected with a line connecting the above porosity plots to each other, from the surface (i.e., the distance from the outlet-side surface, corresponding to the above arithmetic average porosity on the line connecting the above plots to each other). Fig. 10 is a graph showing a relation between the distance from the outlet-side surface of the partition wall (the distance in the thickness direction) and the porosity in the position of the distance.

### (Average Pore Diameter of Upstream Layer)

The partition wall was cut from the joined type honeycomb structure, the downstream layer of the partition wall was removed by grinding, the average pore diameter of the remaining portion of the partition wall was measured, and this diameter was obtained as the average pore diameter of the partition wall upstream layer. The average pore diameter was obtained by using a mercury porosimeter.

### (Average Pore Diameter of Downstream Layer)

The partition wall was cut from the joined type honeycomb structure, and the pore distribution of the partition wall was measured by using the mercury porosimeter. Afterward, the downstream layer of the partition wall was removed from the partition wall by the grinding, and the pore distribution of the remaining portion (corresponding to the upstream layer of the partition wall) was measured. A difference between a pore distribution 51 of the whole partition wall and the pore distribution (a pore distribution 52 of the upstream layer of the partition wall) of a portion (corresponding to the upstream layer of the partition wall) of the partition wall excluding the downstream layer of the partition wall was considered as a pore distribution 53 of the downstream layer of the partition wall, and a pore diameter forming a peak in the pore distribution was considered as an average pore diameter 54 of the downstream layer of the partition wall (see Fig. 11). Fig. 11 is a graph showing the pore distribution of the whole partition wall (the whole partition wall including the upstream layer of the partition wall and the downstream layer of the partition wall), the pore distribution of the upstream layer of the partition wall, the pore distribution of the downstream layer of the partition wall and the average pore diameter of the downstream layer of the partition wall.

### Loading of Catalyst:

A catalyst was loaded in the resultant joined type honeycomb structure. A catalyst slurry was prepared by adding an Al₂O₃ sol and a water content to a Pt-loaded γ -Al₂O₃ catalyst and CeO₂ powder (a co-catalyst). Next, the catalyst slurry was loaded in the joined type honeycomb structure by wash coating so that a platinum component was 1.06 g/L with respect to the joined type honeycomb structure and the total component was 30 g/L. A catalyst loading method was a method of allowing the catalyst slurry to flow into the cells (the cells on an exhaust gas inflow side) from the end face of the joined type honeycomb structure on the exhaust gas inflow side. When the catalyst slurry was allowed to flow into the cells from the end face of the structure on the inflow side to coat the cells with the catalyst, a large amount of catalyst can be loaded on "the upstream layers of the partition walls" having a large average pore diameter. Then, when a thermal treatment was performed at 600°C after drying, a catalyst-loaded joined type honeycomb structure was obtained. As to the resultant catalyst-loaded joined type honeycomb structure, a regeneration efficiency test, the measurement of soot loading pressure drop and the evaluation of PM emission were performed by the following methods. The obtained results are shown in Table 1.

### [1] Regeneration Efficiency Test:

The catalyst-loaded joined type honeycomb structure was mounted in a 2.0-liter (L) diesel engine, and 8 g/liter (g/L) of particulate matters (PM) were deposited in the catalyst-loaded joined type honeycomb structure at a constant rate of 2000 rpm x 50 Nm. The catalyst-loaded joined type honeycomb structure was removed, and the mass of the particulate matters (PM) deposited in the catalyst-loaded joined type honeycomb structure was measured. After measuring the mass, the catalyst-loaded joined type honeycomb structure including the deposited particulate matters was attached again, an exhaust gas temperature was raised by post injection, and the inlet gas temperature of the catalyst-loaded joined type honeycomb structure was kept at 650°C for ten minutes. The post injection was stopped, the catalyst-loaded joined type honeycomb structure was removed, and the mass of the particulate matters (PM) deposited in the catalyst-loaded joined type honeycomb structure was measured. A ratio of the mass of the particulate matters burnt in the test with respect to the mass of the deposited particulate matters was obtained as a regeneration efficiency indicating the degree of the burning of the particulate matters (PM).

### [2] Soot Loading Pressure Drop:

When 8 g/liter (g/L) of particulate matters (PM) were deposited in the catalyst-loaded joined type honeycomb structure, the pressure of a gas inlet portion and the pressure of a gas outlet portion were measured in the catalyst-loaded joined type honeycomb structure, and a difference between the pressures was obtained as a pressure drop (the soot loading pressure drop). The pressure drop (the soot loading pressure drop) were measured when 0.1 g/L of particulate matters (PM) were deposited and when 6 g/L of particulate matters (PM) were deposited. The pressure drop at a time when 0.1 g/L of particulate matters (PM) were deposited was obtained as an initial pressure drop.

### [3] PM Emission

A DPF was attached to a 2.0 L diesel engine mounted vehicle, and an emission test was performed in accordance with an European regulation mode. The PM emission was measured, and the collection performance of the catalyst-loaded joined type honeycomb structure was evaluated.

**[Table 1]**

| | Upstream layer | | | Downstream layer | | | Regeneration efficiency (-) | Soot loading pressure drop | | PM emission (mg/km) |
|---|---|---|---|---|---|---|---|---|---|---|
| | Thickness (µm) | Porosity (%) | Pore diameter (µm) | Thickness (µm) | Porosity (%) | Pore diameter (µm) | | 0.1g/L | 6g/L | |
| Example 1 | 430 | 60 | 50 | 40 | 40 | 5 | 55 | 1.5 | 13 | 1.0 |
| Comparative Example 1 | 430 | 60 | 50 | - | - | - | 52 | 1 | 12 | 29.7 |

### (Comparative Example 1)

A catalyst-loaded joined type honeycomb structure was prepared in the same manner as in Example 1 except that any partition wall downstream layer was not formed. An average pore diameter and porosity were measured by the following methods. Moreover, a regeneration efficiency test, the measurement of soot loading pressure drop and the evaluation of PM emission were performed by the above methods. Results are shown in Table 1.

### (Porosity)

The porosity was measured by using a mercury porosimeter (AutoPore III manufactured by Micromeritics Co.).

### (Average Pore Diameter)

The average pore diameter was measured by using the mercury porosimeter (AutoPore III manufactured by Micromeritics Co.).

### (Comparative Example 2)

A honeycomb structure was prepared in the same manner as in Example 1 except that after forming plugging portions in a formed honeycomb article and firing the article, downstream layers were formed and the article was fired again. Since the firing was performed twice in the manufacturing method of the honeycomb structure of Comparative Example 2, production efficiency lowered as much as about 25%. It is to be noted that the production efficiency is calculated based on a manufacturing cost.

### Consideration 1:

In the catalyst-loaded joined type honeycomb structure of Example 1, a downstream layer having a thickness of 40 µm, a porosity of 40% and an average pore diameter of 5 µm was formed on the face of the partition wall on the exhaust gas outflow side (the outflow side of the partition wall in a thickness direction when the exhaust gas passed through the partition wall). Moreover, it has been seen from Fig. 9 that the downstream layer 42 did not penetrate the pores of the upstream layer 41 but was formed in a layered state on the surface of the upstream layer 41. This is because in a formed honeycomb article before fired, an organic matter such as a pore former is present in the partition wall (the upstream layer), and hence when the partition wall surfaces of the formed honeycomb article before fired are coated with a downstream layer forming slurry, the downstream layer forming slurry does not enter the partition walls of the formed honeycomb article.

### Consideration 2:

Both Example 1 and Comparative Example 1 had a regeneration efficiency of about 55%, and a large difference was not recognized between both the examples. This is supposedly because both the catalyst-loaded joined type honeycomb structures of Example 1 and Comparative Example 1 have large partition wall pore diameters, the catalyst is loaded in the pores, hence a contact efficiency between the catalyst and collected particulate matters improves, and a burning speed can be increased.

### Consideration 3:

During the measurement of the soot loading pressure drop, in the catalyst-loaded joined type honeycomb structure of Example 1, the partition walls were provided with the downstream layers having a porosity of 40% and an average pore diameter of 5 µm. Therefore, a resistance during the gas passing increased, and the initial pressure drop indicated a slightly large value with respect to the catalyst-loaded joined type honeycomb structure of Comparative Example 1. As to the pressure drop (the soot loading pressure drop) when 6 g/L of particulate matters were deposited (when a sufficient amount of particulate matters were collected), in the catalyst-loaded joined type honeycomb structures of Example 1 and Comparative Example 1, the approximately equal degree of the rise of the soot loading pressure drop was indicated while the difference of the initial pressure drop was kept, and any excessive pressure drop rise due to the deposition of the particulate matters was not recognized. It is considered that a reason why any excessive pressure drop rise was not recognized in this manner even in the catalyst-loaded joined type honeycomb structure of Example 1 is that the agglomerated particulate matters were deposited in a bridged state on an interface between the upstream layer and the downstream layer and that the penetration of the particulate matters through the downstream layer (through the pores) was suppressed. Therefore, the particulate matters were not easily deposited in the pores of the downstream layer, and the pressure drop rise was suppressed.

### Consideration 4:

It has been seen from the result of the PM emission that the particulate matters are securely deposited in the catalyst-loaded joined type honeycomb structure of Example 1. It is considered that in Comparative Example 1, the pore diameters were large, a large amount of particulate matters were not collected but passed through the partition wall, and hence a PM emission value increased. Thus, it is seen that in the catalyst-loaded joined type honeycomb structure of Example 1, the contact efficiency between the collected particulate matters and the catalyst can be improved, the burning speed can be increased, and additionally a regulated value can be cleared. The structure can be put to practical use.

The manufacturing method of the present invention can efficiently manufacture a honeycomb structure which can preferably be used for collecting or removing particulates included in exhaust gases discharged from an internal combustion engine typified by a diesel engine, an engine for an ordinary car or an engine for a large vehicle such as a truck or a bus, and various types of burning devices.

## Claims

1. A manufacturing method of a honeycomb structure, comprising the steps of:
forming a forming material containing a ceramic material into a honeycomb article including porous partition walls which separate and form a plurality of cells functioning as through channels of a fluid;
drying the formed honeycomb article to prepare a dried honeycomb article;
forming plugging portions in opening ends of the predetermined cells on one side and opening ends of the remaining cells on the other side in the dried honeycomb article;
charging a downstream layer forming slurry containing a ceramic material into the predetermined cells of the dried honeycomb article having the formed plugging portions, discharging the downstream layer forming slurry to coat the inner wall surfaces of the predetermined cells with the downstream layer forming slurry, and then drying the article to prepare the coated and dried honeycomb article in which downstream layer forming films are applied onto the inner wall surfaces of the predetermined cells; and
firing the coated and dried honeycomb article having the formed plugging portions to prepare the honeycomb structure in which porous downstream layers having an average pore diameter smaller than that of the partition walls are applied onto the inner wall surfaces of the predetermined cells and which has the formed plugging portions.

2. The manufacturing method of the honeycomb structure according to claim 1, wherein the ceramic material contained in the forming material of the formed honeycomb article is the same as that contained in the downstream layer forming slurry.

3. The manufacturing method of the honeycomb structure according to claim 2, wherein the ceramic material contains silicon carbide particles and metallic silicon.

4. The manufacturing method of the honeycomb structure according to any one of claims 1 to 3, wherein the coated and dried honeycomb article having the formed plugging portions is fired in a temperature range of 1400 to 1800°C.

5. The manufacturing method of the honeycomb structure according to any one of claims 1 to 4, wherein the downstream layers have an average pore diameter of 1 to 15 µm and the partition walls have an average pore diameter of 35 to 80 µm in the honeycomb structure having the formed plugging portions.

## Patentansprüche

1. Verfahren zum Herstellen einer Wabenstruktur, das folgende Schritte umfasst:
Formen eines Formmaterials, das ein keramisches Material umfasst, zu einem Wabenartikel, der poröse Trennwände umfasst, die eine Vielzahl von Zellen, die als Durchlasskanäle für ein Fluid fungieren, voneinander trennen und ausbilden;
Trocknen des geformten Wabenartikels, um einen getrockneten Wabenartikel herzustellen;
Formen von Verschlussabschnitten in Öffnungsenden der vorbestimmten Zellen auf einer Seite und Öffnungsenden der übrigen Zellen auf der anderen Seite im getrockneten Wabenartikel:
Füllen einer eine Stromabwärtsschicht ausbildenden Aufschlämmung, die ein Keramikmaterial umfasst, in die vorbestimmten Zellen des getrockneten Wabenartikels mit den ausgebildeten Verschlussabschnitten, Ablassen der die Stromabwärtsschicht ausbildenden Aufschlämmung, um die Innenwandflächen der vorbestimmten Zellen mit der Stromabwärtsschicht-ausbildenden Aufschlämmung zu beschichten und dann Trocknen des Artikels, um den beschichteten und getrockneten Wabenartikel herzustellen, in dem Stromabwärtsschicht-ausbildende Filme auf die Innenwandflächen der vorbestimmten Zellen aufgebracht sind; und
Brennen des beschichteten und getrockneten Wabenartikels mit den geformten Verschlussabschnitten, um die Wabenstruktur herzustellen, in der poröse Stromabwärtsschichten mit einem durchschnittlichen Porendurchmesser, der kleiner ist als der der Trennwände, auf die Innenwandflächen der vorbestimmten Zellen aufgebracht sind, und die die geformten Verschlussabschnitte aufweist.

2. Verfahren zur Herstellung der Wabenstruktur nach Anspruch 1, wobei das Keramikmaterial, das im Formmaterial des geformten Wabenartikels enthalten ist, das gleiche ist wie das, das in der Stromabwärtsschicht-ausbildenden Aufschlämmung enthalten ist.

3. Verfahren zur Herstellung der Wabenstruktur nach Anspruch 2, wobei das Keramikmaterial Siliziumkarbidpartikel und metallisches Silizium enthält.

4. Verfahren zur Herstellung der Wabenstruktur nach einem der Ansprüche 1 bis 3, wobei der beschichtete und getrocknete Wabenartikel mit den geformten Verschlussabschnitten in einem Temperaturbereich von 1400 bis 1800 °C gebrannt wird.

5. Verfahren zur Herstellung der Wabenstruktur nach einem der Ansprüche 1 bis 4, wobei die Stromabwärtsschichten einen durchschnittlichen Porendurchmesser von 1 bis 15 µm und die Trennwände einen durchschnittlichen Porendurchmesser von 35 bis 80 µm in der Wabenstruktur mit den ausgebildeten Verschlussabschnitten aufweisen.

## Revendications

1. Procédé de fabrication d'une structure en nid d'abeilles, comprenant les étapes :
de formation d'un matériau de formation contenant une céramique en un élément en nid d'abeilles comprenant des parois de séparation poreuses qui séparent et forment une pluralité de cellules agissant en tant que canaux traversants d'un fluide ;
de séchage de l'élément en nid d'abeilles formé pour préparer un élément en nid d'abeilles séché ;
de formation de parties d'obturation dans les extrémités d'ouverture des cellules prédéterminées d'un côté et dans les extrémités d'ouverture des cellules restantes de l'autre côté dans l'élément en nid d'abeilles séché ;
de chargement d'une boue de formation de couche en aval contenant une céramique dans les cellules prédéterminées de l'élément en nid d'abeilles séché comportant les parties d'obturation formées, de déchargement de la boue de formation de couche en aval pour recouvrir les surfaces de parois intérieures des cellules prédéterminées avec la boue de formation de couche en aval, et de séchage ensuite de l'élément pour préparer l'élément en nid d'abeilles revêtu et séché dans lequel des films de formation de couche en aval sont appliqués sur les surfaces de parois intérieures des cellules prédéterminées ; et
de cuisson de l'élément en nid d'abeilles revêtu et séché comportant les parties d'obturation formées pour préparer la structure en nid d'abeilles dans laquelle les couches poreuses en aval ayant un diamètre de pore moyen inférieur à celui des parois de séparation sont appliquées sur les surfaces de parois intérieures des cellules prédéterminées et qui comporte les parties d'obturation formées.

2. Procédé de fabrication de la structure en nid d'abeilles selon la revendication 1, dans lequel la céramique contenue dans le matériau de formation de l'élément en nid d'abeilles formé est identique à celle contenue dans la boue de formation de couche en aval.

3. Procédé de fabrication de la structure en nid d'abeilles selon la revendication 2, dans lequel la céramique contient des particules de carbure de silicium et du silicium métallique.

4. Procédé de fabrication de la structure en nid d'abeilles selon l'une quelconque des revendications 1 à 3, dans lequel l'élément en nid d'abeilles revêtu et séché comportant les parties d'obturation formées est cuit dans une plage de température de 1400 à 1800 °C.

5. Procédé de fabrication de la structure en nid d'abeilles selon l'une quelconque des revendications 1 à 4, dans lequel les couches en aval ont un diamètre de pore moyen de 1 à 15 µm et les parois de séparation ont un diamètre de pore moyen de 35 à 80 µm dans la structure en nid d'abeilles comportant les parties d'obturation formées.
